Europäisches Patentamt

European Patent Office

Office européen des brevets

(11) Veröffentlichungsnummer: **0 243 577 B1**

# EUROPÄISCHE PATENTSCHRIFT

(45) Veröffentlichungstag der Patentschrift: 07.08.91

(51) Int. Cl.⁵: **F16C 3/20**

(21) Anmeldenummer: 87100670.6

(22) Anmeldetag: 20.01.87

(54) **Kurbelwelle aus einem eisenmetallischen Werkstoff für Hubkolbenmaschinen.**

(30) Priorität: 26.04.86 DE 3614227

(43) Veröffentlichungstag der Anmeldung:
04.11.87 Patentblatt 87/45

(45) Bekanntmachung des Hinweises auf die
Patenterteilung:
07.08.91 Patentblatt 91/32

(84) Benannte Vertragsstaaten:
DE ES FR GB IT NL SE

(56) Entgegenhaltungen:
DE-C- 485 336
FR-A- 340 964
FR-A- 936 262
US-A- 1 349 893
US-A- 1 494 106

(73) Patentinhaber: **Dr.Ing.h.c. F. Porsche Aktiengesellschaft**
**Porschestrasse 42**
**W-7000 Stuttgart 40(DE)**

(72) Erfinder: **Ampferer, Herbert, Dipl.-Ing. FH**
**Metternzimmerer Strasse 24**
**W-7123 Sachsenheim 2(DE)**
Erfinder: **Krotky, Peter, Dipl.-Ing.**
**Mozartstrasse 11**
**W-7261 Simmozheim(DE)**

## Beschreibung

Die Erfindung betrifft eine Kurbelwelle nach dem Oberbegriff des Patentanspruchs 1.

An fortschrittliche Brennkraftmaschinen der Hubkolben-Bauart für Personenwagen, Zweiradfahrzeuge oder dergleichen wird die Forderung gestellt, daß sie bezüglich Gewicht und Bauraum optimiert sind. Bei gegebener Zahl der Zylinder und festgelegtem Zylinderdurchmesser kann dies durch die Zylinderabstände und Kurbelwellengestaltung beeinflußt werden.

Aufgabe der Erfindung ist es, eine Kurbelwelle aus eisenmetallischem Werkstoff zu schaffen, deren Gewicht und Baulänge bei gutem Massenausgleich relativ gering ist.

Es ist bekannt, FR-A 340 964 und US-A 1 494 106, Gegengewichte einer Kurbelwelle für Brennkraftmaschinen mit Bohrungen zu versehen, in die Körper aus Schwermetall eingesetzt sind.

Erfindungsgemäß wird diese Aufgabe durch die kennzeichnenden Merkmale des Patentanspruchs 1 gelöst. Weitere, die Erfindung ausgestaltende Merkmale sind in dem Unteranspruch enthalten.

Die mit der Erfindung hauptsächlich erzielten Vorteile sind darin zu sehen, daß durch die Bohrungen in den Hubzapfen und die Schwermetallkörper in den Gegengewichten die Kurbelwelle bezüglich Gewicht und Baulänge optimiert ist. Durch die Schwermetallkörper können die Wangen bzw. Gegengewichte schmal gehalten und die Länge der Gegengewichte von der Kurbelwellenlängsachse aus betrachtet reduziert werden. Eine besonders günstige Auslegung ist möglich, wenn die Hohlbohrungen exzentrisch zu den Hubzapfen verlaufen und jedes Gegengewicht mehrere Schwermetallkörper aufweist. Die Schwermetallkörper mit kreiszylindrischer Form können auf einfache Weise in Bohrungen der Gegengewichte eingesetzt und dort befestigt werden.

Werden die Schwermetallkörper durch ein Masseteil und einen dieses umgebenden Stahlmantel gebildet und form- und/oder kraftschlüssig in den Bohrungen der Gegengewichte gehalten, so ist ihre Montage einfach und ihre Halterung sicher.

In der Zeichnung werden Ausführungsbeispiele der Erfindung gezeigt, die nachstehend näher beschrieben sind. Es zeigt

| | |
|---|---|
| Fig. 1 | eine Längsansicht einer Kurbelwelle, |
| Fig. 2 | eine Seitenansicht der Kurbelwelle, |
| Fig. 3 | einen Schnitt nach der Linie III - III der Fig. 2 in größerem Maßstab, |
| Fig. 4 | einen Schnitt entsprechend Fig. 3 einer weiteren Ausführungsform, |
| Fig. 5 | eine Teilansicht der Fig. 2 mit einer weiteren Ausführungsform, |
| Fig. 6 | eine Schrägansicht der Kurbelwelle. |

Die Kurbelwelle 1, die für eine nicht gezeigte Brennkraftmaschine der Hubkolbengattung ausgebildet ist, besteht aus einem metallischen Werkstoff wie Stahl oder Stahlguß und umfasst Lagerzapfen 2, 3, 4, 5, die koaxial zu einer Längsmittelachse B-B dieser Kurbelwelle verlaufen. Gegenüber den Lagerzapfen 2, 3, 4, 5 versetzt angeordnet sind Hubzapfen 6, 7, 8, wobei jeder Hubzapfen zur Aufnahme von zwei nicht dargestellten Pleuelstangen ausgebildet ist. Die Hubzapfen 6, 7, 8 sind auf einer theoretischen Kreisumfangslinie 9 der Kurbelwelle 1 gleichmäßig verteilt, d.h. im Winkel von $\alpha$ 120$^\circ$ gruppiert. Die 50 gestaltete Kurbelwelle ist für eine sechszylindrige Brennkraftmaschine mit zwei V-förmig verlaufenden Zylinderreihen bestimmt.

Zwischen den Hubzapfen 6, 7, 8 und den Lagerzapfen 2, 3, 4, 5 erstrecken sich flache, plattenartige Wangen 10, 11; 12, 13; 14, 15, die quer zur Längsmittelachse B-B der Kurbelwelle 1 ausgerichtet sind. Dabei begrenzen die Wangen 10, 11 den Hubzapfen 6, die Wangen 12, 13 den Hubzapfen 7 und die Wangen 14, 15 den Hubzapfen 8. Alle Wangen beginnen im Bereich der Hubzapfen und sind über die Längsmittelachse B-B hinaus verlängert und als Gegengewichte 16, 17; 18, 19; 20, 21 ausgebildet. Danach umfassen die Wangen 10, 11 die Gegengewichte 16, 17, die Wangen 12, 13 die Gegengewichte 18, 19 und die Wangen 14, 15 die Gegengewichte 20, 21. Die Hubzapfen 6, 7, 8 sind alt Hohlbohrungen 22, 23, 24 versehen, die zwar in Richtung der Mittellängsachse C-C der Hubzapfen, jedoch exzentrisch zu besagter Mittelachse verlaufen, dergestalt, daß der Abstand E der Mittelachsen D-D der Hohlbohrungen 22, 23, 24 zur Längsmittelachse B-B der Kurbelwelle 1 größer ist als der Abstand F der Hubzapfen 6, 7, 8 zur zuletzt genannten Achse.

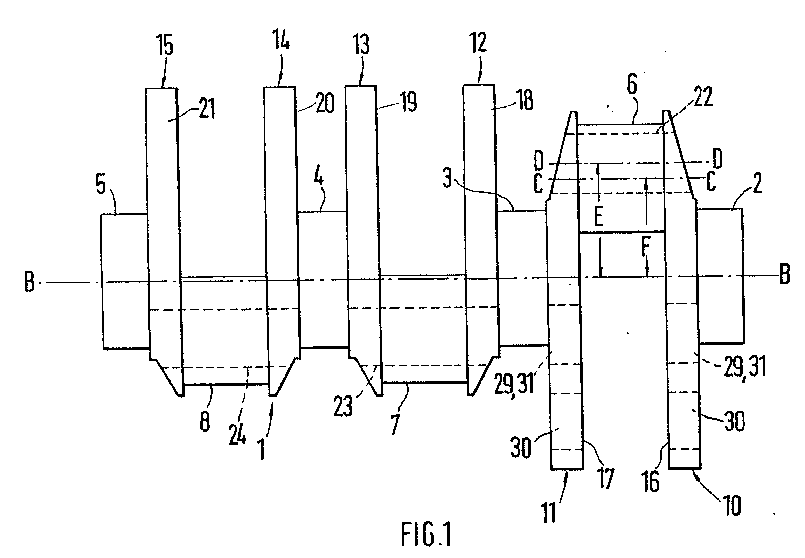

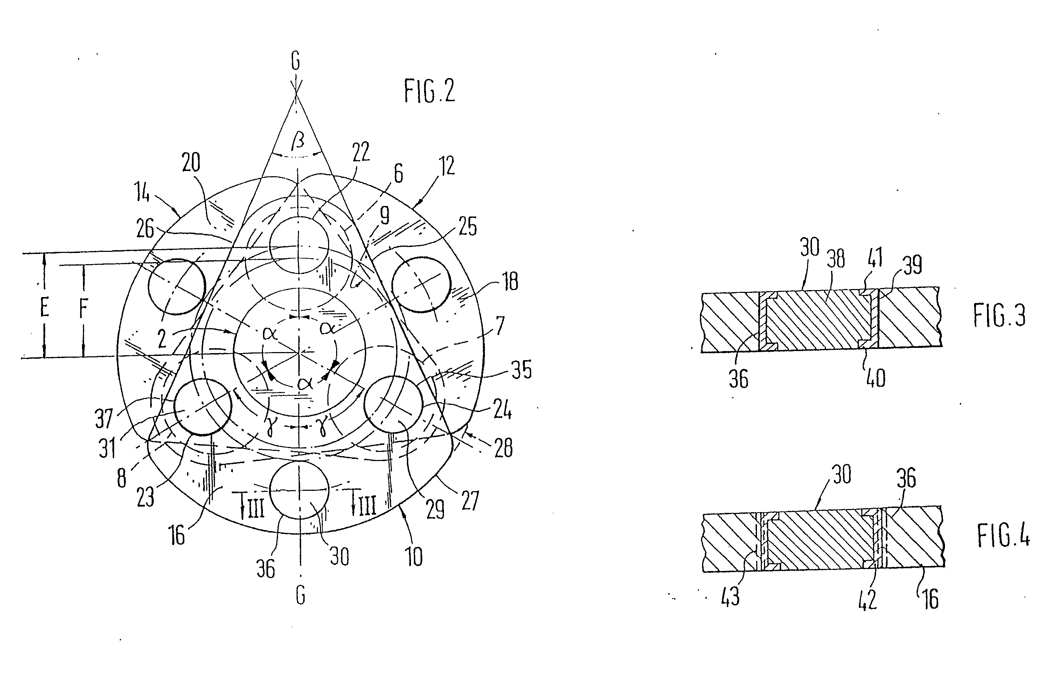

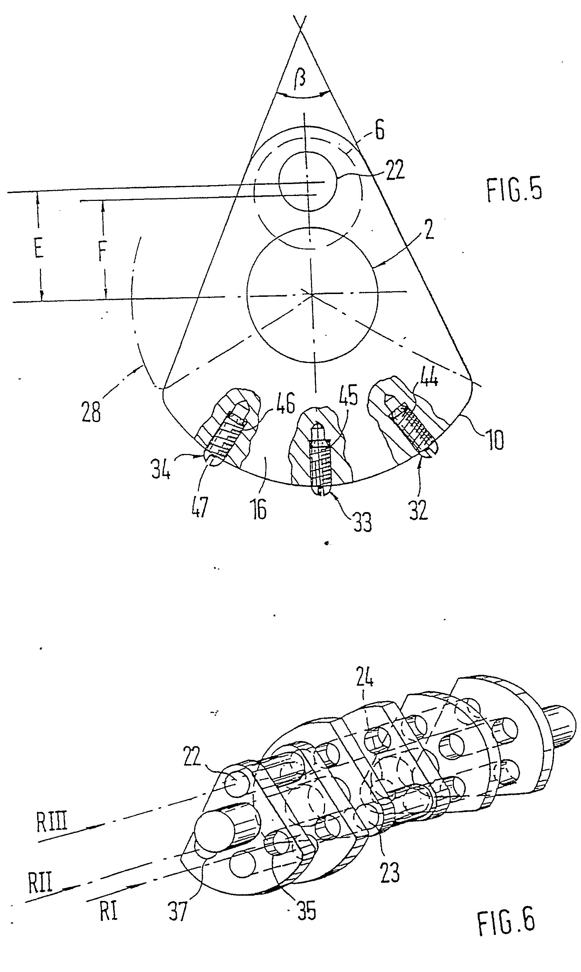

Jede Wange beispielsweise 10 wird - in der Seitenansicht gesehen (Fig. 2) - von Linien 25, 26 eines spitzen Dreiecks (Winkel $\beta$ 40$^\circ$) begrenzt, anders ausgedrückt, sie erweitert sich in Richtung Gegengewicht 16, wo ihre Begrenzung 27 auf einer theoretischen Kreislinie 28 der Kurbelwelle 1 liegt. Außerdem ist jedes Gegengewicht, beispielsweise 16, mit mehreren Schwermetallkörpern 29, 30, 31 bzw. 32, 33, 34 (Fig. 2 und 5) versehen.

Die Schwermetallkörper 29, 30, 31 und 32, 33, 34 bestehen aus Wolfram, Blei oder dergleichen, die in Ausnehmungen des jeweiligen Gegengewichtes eingesetzt sind.

Gemäß Fig. 2 weisen die Schwermetallkörper 29, 30, 31 kreiszylindrische Form auf und sind in axial zur Kurbelwelle 1 verlaufende Bohrungen 35, 36, 37 eingesetzt. Die Bohrung 36 liegt auf einer die Längsmittelachse B-B schneidenden Ebene G-G, wogegen die Bohrungen 35 und 37 im Winkel $\gamma$ zu der Ebene G-G angeordnet sind.

Der Schwermetallkörper 30 kann aber auch durch ein Masseteil 38 aus Blei und einen letzteres umgebenden kreiszylindrischen Stahlmantel 39 gebildet werden, wobei der so gebildete Schwermetallkörper kraftschlüssig (= Preßsitz) in der Bohrung 36 gehalten ist. Der Stahlmantel 39 ist im Querschnitt U-förmig ausgebildet, wobei seine Schenkel 40, 41 das Masseteil 38 derart umgreifen, daß zwischen Masseteil 38 und Stahlmantel 39 keine Relativbewegung möglich ist (Fig. 3).

In Fig. 5 ist der Schwermetallkörper 30 formschlüssig in der Bohrung 36 gehalten. Hierzu weist der Schwermetallkörper 30 ein Außengewinde 42 auf, das in ein Gewinde 43 der Bohrung 36 eingedreht ist.

Die Schwermetallkörper 32, 33, 34 sind Gewindebolzen, die in radialen Gewindebohrungen 44, 45, 46 festgelegt sind, wobei jeder dieser Schwermetallkörper mit einem Schraubenkopf 47 versehen ist (Fig. 5).

Ein Teil der Bohrungen, nämlich 35 und 37, für die Schwermetallkörper 29 und 31 und die Hohlbohrungen 22, 23, 24 haben gemeinsame Bearbeitungsrichtungen R I, R II, R III, d.h. jeweils eine Hohlbohrung und vier Bohrungen in den Gegengewichten werden durch Führung eines Bohrers entlang einer Bearbeitungsrichtung eingebracht (Fig. 6).

## Patentansprüche

1. Kurbelwelle (1) aus eisenmetallischem Werkstoff für Hubkolbenmaschinen mit in einer Kurbelwellenlängsmittelachse (B-B) angeordneten Lagerzapfen (2-5) und gegenüber diesen versetzten Hubzapfen (6-8), die von sich quer zur Kurbelwellenlängsmittelachse erstreckenden, als Gegengewichte ausgebildeten Wangen begrenzt werden, wobei diese Gewichte Bohrungen (35-37) mit darin festgesetzten Schwermetallkörpern (29-34) aufweisen und die Hubzapfen (6-8) mit in Richtung ihrer Mittelachse ausgerichteten Erleichterungsbohrungen (22-24), vorzugsweise Hohlbohrungen, versehen sind, **dadurch gekennzeichnet**, daß die Schwermetallkörper (30) ein Masseteil (38), beispielsweise aus Blei, umfassen, das von einem kreiszylindrischen Stahlmantel (39) umgeben ist, wobei jeder Schwermetallkörper kraft- und/oder formschlüssig in der jeweiligen Bohrung (36) gehalten ist.

2. Kurbelwelle nach Anspruch 1, **dadurch gekennzeichnet**, daß der Stahlmantel (39) im Querschnitt U-förmig ausgebildet ist und mit Schenkeln (40, 41) das Masseteil (38) umgreift.

## Claims

1. A crankshaft (1) of iron-metallic material for reciprocating-piston engines, having bearing pins (2 to 5) arranged in a longitudinal median axis (B-B) of the crankshaft and having reciprocating pins (6 to 8) offset with respect to the said bearing pins (2 to 5) and bounded by side plates extending transversely to the longitudinal median axis of the crankshaft and constructed as counterweights, the said weights being provided with bores (35 to 37) with heavy-metal members (29 to 34) secured therein and the reciprocating pins (6 to 8) being provided with lightening bores (22 to 24), preferably hollow bores, orientated in the direction of the median axis thereof, characterized in that the heavy-metal members (30) comprise a mass member (38), preferably of lead, surrounded by a circular cylindrical steel Jacket (39), each heavy-metal member being held with positive and/or non-positive locking in the respective bore (36).

2. A crankshaft according to Claim 1, characterized in that the steel jacket (39) is made U-shaped in cross-section and engages around the mass member (38) with arms (40, 41).

## Revendications

1. Vilebrequin (1) réalisé dans un matériau sidérurgique pour moteur à piston alternatif comportant des tourillons (2 à 5) placés dans un axe médian longitudinal (B-B) du vilebrequin et des pivots de course (6 à 8), décalés par rapport aux tourillons, qui sont limités par des flasques s'étendant perpendiculairement à l'axe médian longitudinal du vilebrequin, configurés en contre-poids, ces poids présentant des alésages (35 à 37) avec des corps en métal lourd (29 à 34) fixés à l'intérieur de ceux-ci et les pivots de course (6 à 8) étant pourvus d'alésages d'allègement (22 à 24), de préférence d'alésages creux, orientés dans la direction de leur axe médian, caractérisé en ce que les corps en métal lourd (30) comportent une partie massive (38), par exemple en plomb, qui est entourée par une enveloppe d'acier (39) cylindrique circulaire, chaque corps en métal lourd étant maintenu, par force et/ou par concordance de forme dans le trou 36 respectif.

2. Vilebrequin selon la revendication 1, caractérisé en ce que l'enveloppe d'acier (39) a une section transversale en U et entoure la partie massive (38) par des branches (40, 41).

FIG.1

EP 0 243 577 B1

FIG.2

FIG.3

FIG.4

FIG.5

FIG.6